# EUROPEAN PATENT SPECIFICATION

(11) **EP 1 039 187 B1**
(45) Date of publication and mention of the grant of the patent: **20.04.2005**
(21) Application number: 00301546.8
(22) Date of filing: 28.02.2000
(51) Int. Cl.: F16K 3/312, F16K 3/02

(54) **Flame arresters**
Flammschutzeinrichtung
Dispositif pare-flamme

(30) Priority: 19.03.1999 GB 9906439
(43) Date of publication of application: 27.09.2000
(73) Proprietor: The BOC Group plc, Windlesham Surrey GU20 6HJ (GB)
(72) Inventor: Kusay, Roland Gregor Paul, Surrey, RH1 6BE (GB)
(74) Representative: Bousfield, Roger James

(56) References cited:
- DE-A- 2 402 496
- DE-A- 3 218 573
- DE-A- 3 538 883

## Description

The present invention relates to flame arresters and in particular flame arresters associated with vacuum pumps.

Rotary vacuum pumps and in particular dry running vacuum pumps are potential sources of ignition when pumping flammable vapour mixtures. To prevent or inhibit any possible explosions from spreading to adjoining equipment such as process vessels or to the external environment of the vacuum pump said pumps are built to withstand pressures well above the experienced maximum explosion pressure whilst the pump inlet and outlet connections are protected by suitable flame or detonation arresters.

A particular disadvantage of inlet flame arresters when associated with vacuum pumps is their low conductance under medium to high vacuum conditions which can significantly reduce the effective pumping speed especially at pressures below 100 mbar.

Currently, all flame arresting devices are fixed installations, for example, the arrester element is sandwiched between a pair of flanges. To improve the conductance and therefore improve the vacuum pumping speed to some extent an arrester element larger than the actual required pumping line size is generally installed. Thus, the pair of flanges holding the arrester element will have flanged reducers attached thereby allowing the flame arrester element to be connected to the correct size vacuum line. This makes for a very bulky and costly protection device.

It is an aim of the present invention to provide a retractable flame arrester which takes advantage of the fact that flammable mixtures depending on their specific nature cannot sustain explosion at pressures well below atmospheric pressure.

According to the present invention, a flame arrester comprises a tubular housing provided with means at each end for connection to a vacuum line, a flame arrester element movable between a first flame arrest position in which it is located within the tubular housing and a second position retracted from the tubular housing, and means for moving said flame arrester element from said first to said second position when the pressure/vacuum in the tubular housing falls below a predetermined value.

The means for moving the flame arrester element between said first and second positions can be a manually operated device such as a spindle arrangement or an automatic device including a pneumatic cylinder.

An embodiment of the invention will now be described, by way of example, reference being made to the Figures of the accompanying diagrammatic drawing in which:-
Figure 1 is a side view of a retractable flame arrester according to the present invention; and
Figure 2 is a end view of the retractable flame arrester of Figure 1.

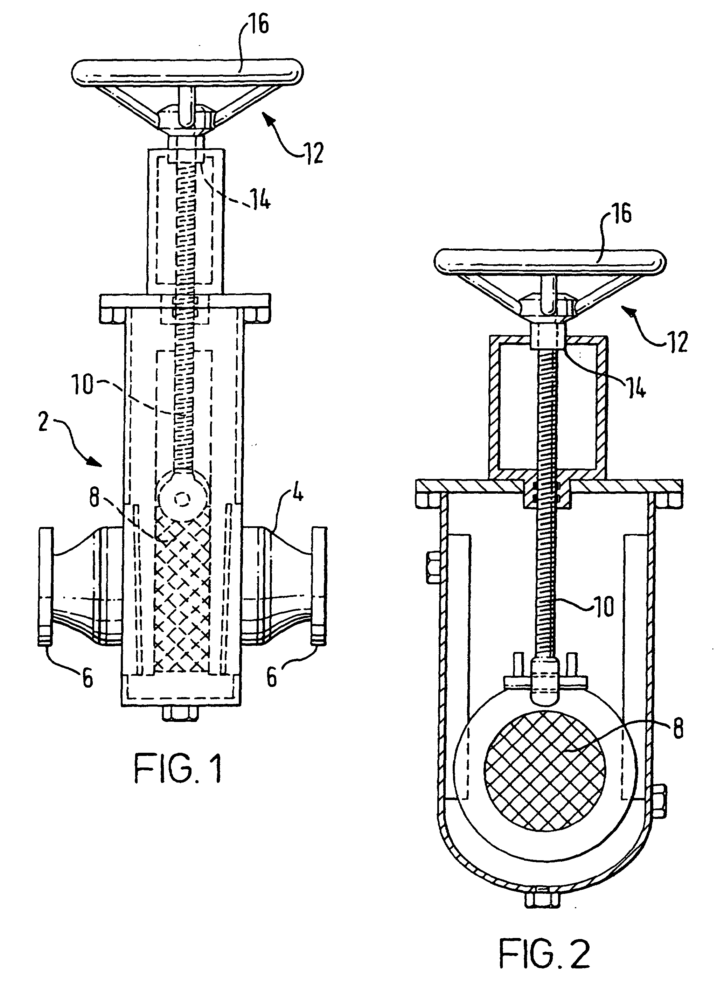

Referring now to Figures 1 and 2, as shown a flame arrester 2 includes a tubular housing 4 provided with a flange 6 at each end for connection to a vacuum line.

In a first operable position as shown a flame arrester element 8 is located within the tubular housing 4 Connected to the upper (as shown) side of the flame arrester element 8 is a lifting spindle 10 which forms part of a manual mechanical means 12 for lifting the flame arrester element 8 from the position as illustrated to a second position where it is lifted clear from the tubular housing and thereby has no effect on the flow of vapours or gases being pumped through the tubular housing 4.

The lifting spindle 10 is threaded and passes through a stationary threaded boss 14. As shown, a rotatable hand wheel 16 engages the upper (as shown) end of the spindle 10.

In use when the pressure of a flammable vapour through a vacuum line is relatively high ie above 100 mbar then the flame arrester element 8 will occupy the position illustrated such that if an explosion occurs then the element 8 would mitigate against the explosion extending to adjoining equipment or the external environment.

Once the pressure in the vacuum line falls below 100 mbar then it is fairly reasonable to assume that no possible ignition or explosion could occur and the lifting means 12 is operated. The hand wheel 16 is rotated which will cause linear movement of the lifting spindle 10 upwardly (as shown) thereby causing the flame arrester element 8 to be raised above the flow of vapour extending through the tubular element 4 such that the pumping efficiency of the rotary pump within the vacuum line is unaffected by the flame arrester 8.

To reiterate the moving or lifting means 12 can be of any known manual or electro pneumatic (automatic) type but the ability to retract the flame arrester element 8 is exceedingly important since in its retracted position it will not resist the flow vapour through the tubular housing 4. Furthermore, a further advantage of a retracting flammable arrester element 8 is that such an element can now be of the same size as vacuum pipe work without the need of an increased diameter to improve conductance.

Electro-pneumatic moving or lifting means in conjunction with a pressure switch (signal) will allow the automatic retraction of the flame arrester element (8) at any flammable mix specific safe pressure, thus contributing to gain maximum pump efficiency.

The smaller size of arrester element together with a possible smaller size of vacuum pump due to the now higher conductivity of the vacuum pumping line will reduce costs of the overall required and installed system.

## Claims

1. A flame arrester (2) comprising a tubular housing (4) provided with means (6) at each end for connection to a vacuum line, a flame arrester element (8) movable between a first flame arrest position in which it is located within the tubular housing (4) and a second position retracted from the tubular housing and means (12) for moving said flame arrester element (8) from said first to said second position when the pressure/vacuum in the tubular housing (4) falls below a predetermined value.

2. A flame arrester as claimed in Claim 1, in which the moving means includes a manually operable means including a threaded lifting spindle (10) attached to the flame arrester element, a stationary threaded boss (14) through which the spindle passes and a rotatable hand wheel (16) for engaging that portion of the threaded lifting spindle which passes through the stationary boss.

3. A flame arrester as claimed in Claim 1, in which the moving means includes an automatic device for moving the flame arrester element from its first to its second position when the vacuum pressure in the tubular housing reaches a preselected valve.

## Patentansprüche

1. Flammensperre (2) mit einem rohrförmigen Gehäuse (4), das mit Mitteln (6) an jedem Ende zur Verbindung mit einer Vakuumleitung versehen ist, einem Flammensperrelement (8), das zwischen einer ersten Flammensperrposition, in welcher es innerhalb des rohrförmigen Gehäuses (4) gelegen ist, und einer zweiten Position beweglich ist, die vom rohrförmigen Gehäuse zurückgezogen ist, und Mitteln (12) zum Bewegen des Flammensperrelements (8) aus der genannten ersten in die genannte zweite Position, wenn der/das Druck/Vakuum im rohrförmigen Gehäuse (4) unter einen vorgegebenen Wert abfällt.

2. Flammensperre nach Anspruch 1, wobei die Bewegungsmittel ein manuell betätigbares Mittel mit einer mit Gewinde versehenen Hubspindel (10), die an dem Flammensperrelement befestigt ist, ein feststehendes, mit Gewinde versehenes Auge (14), durch welches die Spindel hindurchverläuft, und ein drehbares Handrad (16) umfasst, welches mit dem Teil der mit Gewinde versehenen Hubspindel in Eingriff steht, der durch das feststehende Auge hindurchverläuft.

3. Flammensperre nach Anspruch 1, wobei die Bewegungsmittel ein automatisches Gerät zum Bewegen des Flammensperrelements aus seiner ersten in seine zweite Position umfassen, wenn der Vakuumdruck in dem rohrförmigen Gehäuse einen vorgewählten Wert erreicht.

## Revendications

1. Coupe-flamme (2) comprenant un logement tubulaire (4) muni de moyens (6) à chaque extrémité pour un raccordement à une ligne de vide, un élément coupe-flamme (8) mobile entre une première position coupe-flamme dans laquelle il est situé dans le logement tubulaire (4) et une deuxième position où il est rétracté du logement tubulaire, et des moyens (12) pour déplacer ledit élément coupe-flamme (8) de ladite première à ladite deuxième positions lorsque la pression/le vide dans le logement tubulaire (4) chute au-dessous d'une valeur prédéterminée.

2. Coupe-flamme selon la Revendication 1, dans lequel les moyens de déplacement comprennent un moyen actionnable manuellement comprenant une vis de montée et de descente (10) fixée à l'élément coupe-flamme, un bossage fileté stationnaire (14) à travers lequel passe la vis et un volant de manoeuvre rotatif (16) pour engager la portion de la vis de montée et de descente qui traverse le bossage stationnaire.

3. Coupe-flamme selon la Revendication 1, dans lequel les moyens de déplacement comprennent un dispositif automatique pour déplacer l'élément coupe-flamme de sa première à sa deuxième position lorsque la pression/le vide dans le logement tubulaire atteint une valeur présélectionnée.
